# EUROPEAN PATENT SPECIFICATION

(11) **EP 1 702 741 B1**
(45) Date of publication and mention of the grant of the patent: **10.07.2013**
(21) Application number: 04807768.9
(22) Date of filing: 24.12.2004
(51) Int. Cl.: B29C 45/74, B29C 45/76, B29C 45/78

(54) **FORMING MACHINE AND ITS TEMPERATURE CONTROLLING METHOD**
FORMMASCHINE UND TEMPERATURSTEUERVERFAHREN DAFÜR
MACHINE DE FACONNAGE ET PROCEDE DE REGULATION DE LA TEMPERATURE DE CELLE-CI

(30) Priority: 07.01.2004 JP 2004002119
(43) Date of publication of application: 20.09.2006
(73) Proprietor: SUMITOMO HEAVY INDUSTRIES, LTD., Shinagawa-ku, Tokyo 141-8686 (JP)
(72) Inventor: ONISHI, Masashi, SUMITOMO HEAVY INDUSTRIES, LTD., Chiba-shi, Chiba 2630001 (JP)
(74) Representative: Emde, Eric
(86) International application number: PCT/JP2004/019412
(87) International publication number: WO 2005/065915

(56) References cited:
- JP-A- 5 286 018
- JP-A- 6 335 954
- JP-A- 7 329 138
- JP-A- 11 289 793
- JP-A- 61 132 319
- JP-A- 2001 204 184
- JP-A- 2001 328 139
- JP-A- 2003 297 538
- US-A- 2 381 866
- US-A- 4 726 751
- US-A- 5 582 756
- US-A1- 2002 170 696
- US-B1- 6 323 468

## Description

### TECHNICAL FIELD

The present invention relates to molding machines and, more particularly, to a molding machine having an efficient induction heating means as heating means for a portion which needs heating such as a heating cylinder or a mold, and a temperature control method thereof.

### BACKGROUND ART

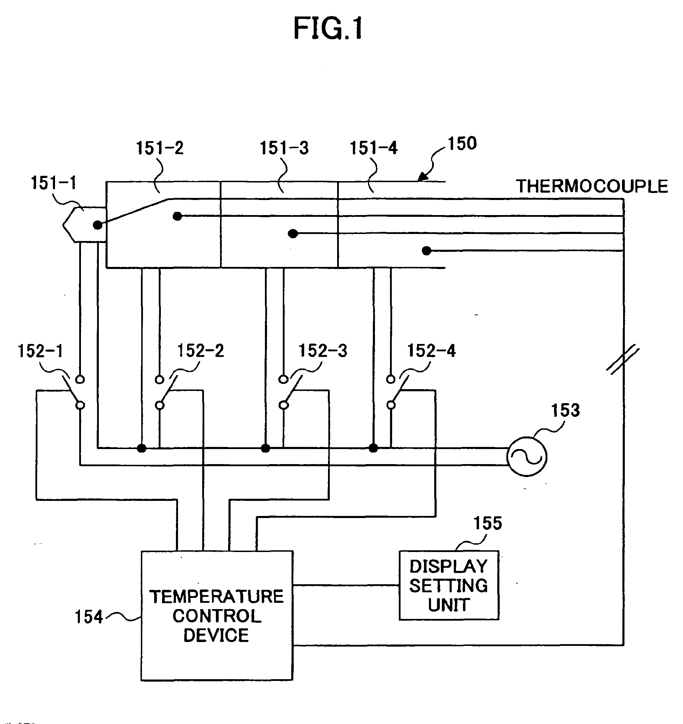

Generally, a band heater is used as a heating means of an injection molding machine or an extruding machine (hereinafter, these are collectively referred to as a molding machine). As shown in FIG. 1, a heating-cylinder 150 is divided into a plurality of zones (four zones are illustrated in FIG. 1) with respect to an axial direction, and band heaters 151-1 to 151-4 are provided in the zones, respectively. The band heaters 151-1 to 151-4 are installed so as to wind around the heating-cylinder, and are connected to a power source 153 via switch means 152-1 to 152-4, respectively. SSRs or contactors are used as the switch means 152-1 to 152-4.

A temperature sensor consisting of a thermocouple is installed in each zone, and a temperature is detected for each zone. A temperature detection signal from the temperature sensor is sent to a temperature control device 154. A display setter 155 can set up the temperature of each zone individually, and setting information on the temperature of each zone is sent to the temperature control device 154. The temperature control device 154 performs a control calculation based on the setting information from the display setter 155 and the temperature detection signal from each temperature sensor so that each zone is heated to the setting temperature by controlling an ON time of each switch means in accordance with the result of the calculation (for example, refer to Japanese Laid-Open Patent Application No.JP-A-7-276458 (page 1, FIGS. 1 and 2).

However, since the heating of the heating-cylinder by the band heaters 151-1 to 151-4 is heating according to heat conduction, there is a problem that a heating efficiency is bad. In addition, since a temperature control is performed by changing ON and OFF of the switch means, that is, changing a duty ratio of ON and OFF of a power supply, it is difficult to perform an accurate temperature control, and there is a problem in that an overshoot or an undershoot tends to occur.

US-A-2002/107,696 discloses an apparatus for molding a metal material. The apparatus includes a vessel with portions defining a passageway through the vessel. An inlet is located toward one end and a member or agitation means is located within the passageway. A plurality of heaters are located a length of the vessel. The first of the heaters is located immediately downstream of the inlet and is a low frequency induction coil heater whereby the temperature gradient through the vessel's sidewall is minimized.

US-A-2,381,866 discloses an apparatus for induction heating of molding machines.

US-A-5,582,756 discloses a heater control device in an injection molding machine. A semiconductor switching circuit is connected to a DC power source for an inverter to control a servomotor in an injection molding machine, and a PWM signal controls an ON/OFF operation of a switching device in the semiconductor switching circuit so as to feed power to a heater of the injection molding machine. Since the DC power source feeds the heater with power, it is possible to overcome irregularity in power supply, and linearly vary a conducting time, thereby finely and accurately controlling a temperature. The DC power source for the inverter to control the servomotor also serves as a DC power source for the heater, resulting in no need for a special power source circuit.

### DISCLOSURE OF THE INVENTION

### PROBLEM SOLVED BY THE INVENTION

It is a general object of the present invention to provide an improved and useful molding machine in which the above-mentioned problems are eliminated.

A more specific object of the present invention is to provide a molding machine which can perform an accurate control of a part to be heated.

Another object of the present invention is to provide a molding machine which can perform heating efficiently with respect to a heating part, which needs heating, such as a heating-cylinder or a mold.

A further object of the present invention is to provide a temperature control method of a molding machine which solves the above-mentioned problems.

### MEANS TO SOLVE THE PROBLEMS

According to the present invention, there is provided a molding machine as set forth in claim 1.

Additionally, according to the present invention, there is provided a temperature control method of a molding machine for heating at least one part to be heated in the molding machine by induction heating, as set forth in claim 8.

Preferred embodiments of the present invention may be gathered from the dependent claims.

### EFFECT OF THE INVENTION

According to the present invention, since the part to be heated such as a heating cylinder or a mold is heated directly, heating with good thermal efficiency is realizable.

According to one embodiment of the present invention, precise temperature control is realizable by controlling an electric power to the induction heating coil by the frequency control or the electric current control.

Moreover, according to one embodiment of the present invention, a cost reduction can be achieved by commonly using the direct current electric power source part for motor control as a power supply source to the induction heating coil. In this case, by providing a voltage adjustment circuit on an input side of the heating part controlling inverter, the output voltage of the heating part controlling inverter can be maintained constant even if the voltage fluctuates due to regeneration of the motor. Therefore, a voltage fluctuation does not affect the temperature control.

Furthermore, according to one embodiment of the present invention, in a case where the direct current electric power source part for motor control is commonly used as a power supply source to the induction heating coil by providing a switch means on an input side of at least the motor controlling inverter from among the heating part controlling inverter and the motor controlling inverter, a maintenance work for parts subsequent to the motor controlling inverter can be performed in a state where the heating of the part to be heated is maintained. This is important for satisfying a demand to maintain the heating of the heating cylinder so as to prevent deterioration of a melted resin in the heating cylinder when performing a maintenance work after performing an actual operation.

### BRIEF DESCRIPTION OF THE DRAWINGS

FIG. 1 is a block diagram of a heating means using a band heater provided to a heating cylinder in a conventional injection molding machine.
FIG. 2 is a side view of an injection molding machine having a heating cylinder to which the present invention is applied.
FIG. 3 is an enlarged cross-sectional view of an injection apparatus shown in FIG. 2.
FIG. 4 is a circuit diagram for explaining a temperature control by an induction heating means according to the present invention.
FIG. 5 is a block diagram showing the induction heating means of a heating cylinder of an injection molding machine according to one embodiment of the present invention.
FIG. 6 is a circuit diagram of an heating part controlling inverter used for temperature control by the induction heating means according to the present invention.
FIG. 7A is a block diagram showing an example of a case where a voltage-up/voltage-down circuit as a voltage adjustment circuit is provided to each heating part controlling shown in FIG. 5.
FIG. 7B is a circuit diagram of the voltage-up/voltage-down circuit shown in FIG. 7A.
FIG. 8A is a circuit diagram of a case where a voltage-down circuit as a voltage adjustment circuit is provided to each heating part controlling inverter shown in FIG. 5.
FIG. 8B is a circuit diagram of a case where a voltage-up circuit as a voltage adjustment circuit is provided to each heating part controlling inverter shown in FIG. 5.
FIG. 9 is a circuit diagram of a case where a switch is connected to each heating part controlling inverter and each motor controlling inverter shown in FIG. 5.

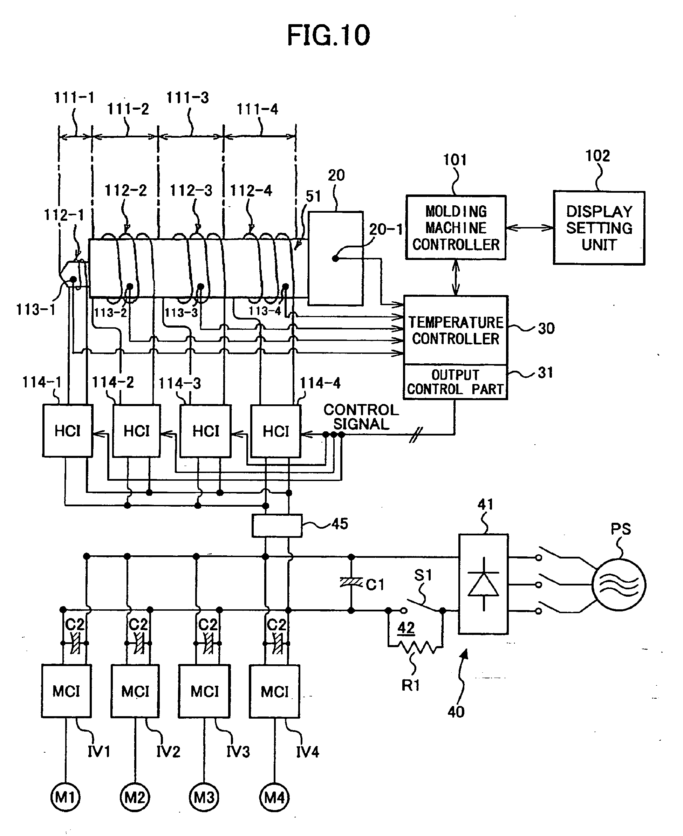

FIG. 10 is a block diagram showing the induction heating means of the heating cylinder of the injection molding machine in a case where one voltage-up/voltage-down circuit is provided to a plurality of heating part controlling inverters.

### BEST MODE FOR CARRYING OUT THE INVENTION

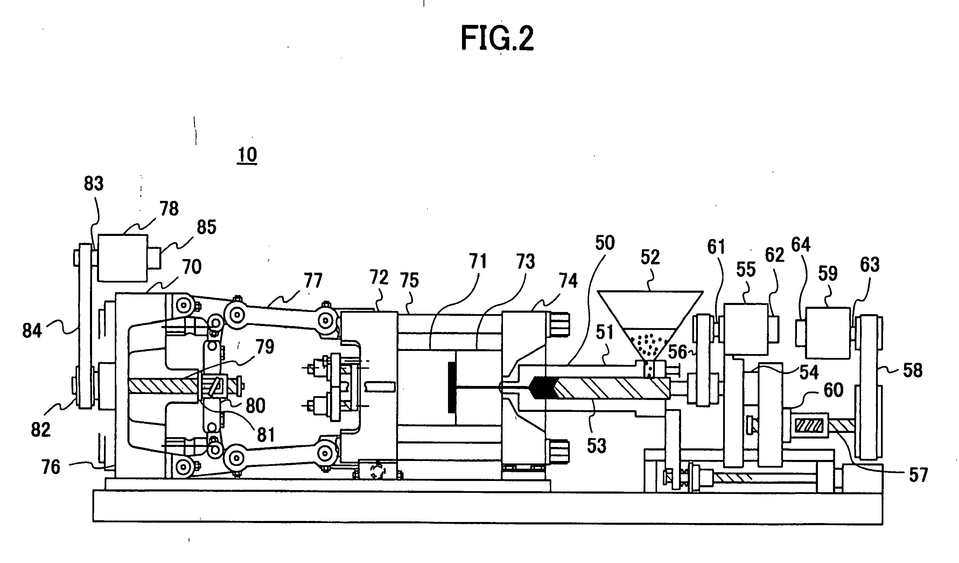

First, a description will be given, with reference to FIG. 2, of an example of an injection molding machine to which the present invention is applied. FIG. 2 is a side view showing an entire structure of an electric injection molding machine as an example of an injection molding machine to which the present invention is applied.

The electric injection molding machine 10 shown in FIG. 2 comprises an injection apparatus 50 and a mold clamping apparatus 70.

The injection apparatus 50 is provided with a heating cylinder, and a hopper 52 is provided to the heating cylinder 51. A screw 53 is provided in the heating cylinder movably forward and backward and rotatably. A rear end of the screw 53 is rotatably supported by a support member 54. The support member 54 is attached with a metering motor 55 such as a servomotor as a drive part. Rotation of the metering motor 55 is transmitted to the screw 53 as a part to be driven through a timing belt 56 attached to an output shaft 61. A rotation detector 62 is connected to a rear end of the output shaft 61. A rotation detector 62 detects a rotational speed of the screw 53 by detecting a number of revolutions or an amount of rotation of the metering motor 55.

The injection apparatus 50 has a screw shaft 57 parallel to the screw 53. A rear end of the screw shaft 57 is connected to an injection motor 59 through a timing belt 58 attached to an output shaft 63 of the injection motor 59 such as a servomotor. Therefore, the screw shaft 57 can be rotated by the injection motor 59. A front end of the screw shaft 57 is in engagement with a nut 60 fixed to the support member 54. When rotating the screw shaft 57 through the timing belt 58 by driving the injection motor 59, the support member 54 becomes movable forward and backward, and, as a result, the screw 53 as a part to be driven can be moved forward and backward. A position detector 64 is connected to a rear end of an output shaft 63 of the injection motor 59. The position detector 64 detects a position of the screw 53, which indicates a drive state of the screw 53, by detecting a number of revolutions or an amount of rotation of the injection motor 59.

The mold clamping apparatus 70 comprises a movable platen 72 to which a movable mold 71 is attached and a stationary platen 74 to which a stationary mold 73 is attached. The movable platen 72 and the stationary platen 74 are coupled to each other by tie bars 75. The movable platen 72 is slidable along the tie bars 75. Additionally, the mold clamping apparatus 70 has a toggle mechanism 77 of which one end coupled to the movable platen 72 and the other end coupled with the toggle support 76. A ball screw shaft 79 is rotatably supported in the central portion of the toggle support 76. A nut 81 formed in a crosshead 80, which is provided in a toggle mechanism 77, is in engagement with the ball screw shaft 79. Moreover, a rear end of the ball screw shaft 79 is provided with a pulley 82, and a timing belt is provided between the output axis 83 of a mold clamping motor 78 such as a servo motor and the pulley 82.

In the mold clamping apparatus 70, when the mold clamping motor 78 as a drive part is driven, rotation of the mold clamping motor 78 is transmitted to the ball screw shaft 79 through the timing belt 84. Then, it is converted from a rotational movement to a linear movement by the ball screw shaft 79 and the nut 81, which results in operation of the toggle mechanism. According to the operation of the toggle mechanism 77, the movable platen 72 moves along the tie bars 75, and mold closing and mold clamping are carried out. A position detector 85 is connected to a rear end of an output shaft 83 of the mold clamping motor 78. The position detector 85 detects a position of the crosshead 80, which moves with rotation of the ball screw shaft 79, a position of the movable platen 72, which is coupled to the crosshead 80 by the toggle mechanism 77, by detecting a number of revolutions or an amount of rotation of the mold clamping motor 78.

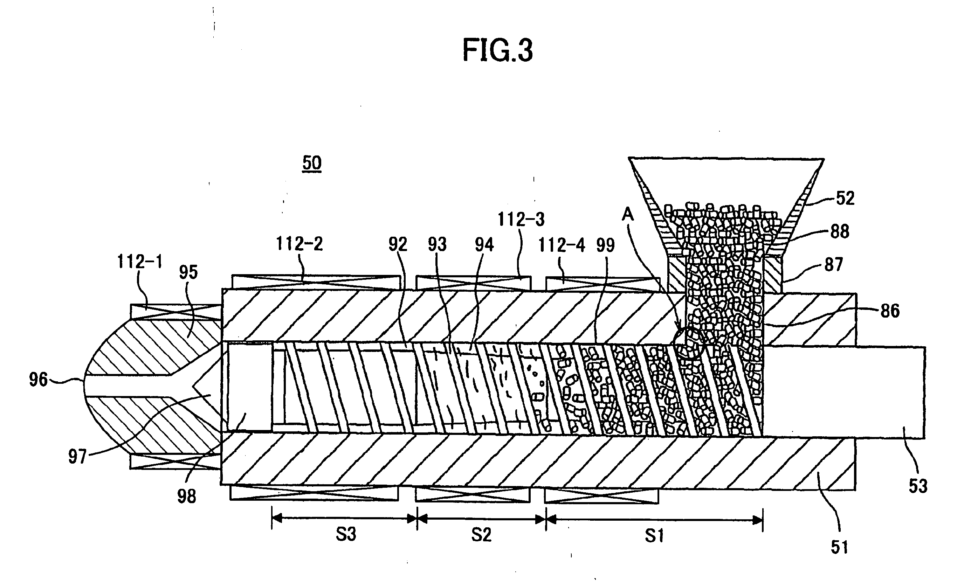

Next, a description will be given, with reference to FIG. 3, of the structure of the injection apparatus 50, which is a part relating to the present invention. FIG. 3 is an enlarged cross-sectional view of the injection apparatus 50.

The injection apparatus 50 has the heating cylinder 51 and the screw 53, which is rotatable and movable forward and backward in the heating cylinder 51 as mentioned above. An injection nozzle 95 formed with a nozzle opening 96 is provided to an extreme end of the heating cylinder 51. A resin supply opening 86 is formed at predetermined position of the heating cylinder 51. A hopper 52 is connected to the resin supply opening 86 through a connection cylinder 87 so that resin pellets 88 in the hopper 52 are supplied inside the heating cylinder 51 through the connection cylinder 87 and the resin supply opening 86. Moreover, induction heating coils 112-1 to 112-4 are attached to the outer circumference of the heating cylinder 51. The resin pellets 88 can be heated and melted within the heating cylinder 51 by supplying electric current to the induction heating coils 112-1 to 112-4.

The screw 53 comprises a flight part 92 and a screw head 97 and a seal part 98 provided on a front end of the flight part 92. The flight part 92 has a flight 93 spirally formed on an outer circumferential surface of the body of the screw 53, and a spiral groove 94 is formed by the flight 93. Moreover, a feed zone S1 in which the resin pellets 88 fallen from the hopper 52 are supplied and fed forward, a compression zone S2 in which the supplied resin pellets 88 are melted while being compressed, and metering zone S3 in which the melted resin is metered by a fixed amount are formed in the flight part 92 in that order from the rear to the front thereof.

When the screw 53 is rotated in a normal direction at the time of a metering process, the resin pellets 88 are supplied to the feed zone S1 through the resin supply opening 86, and are moved forward (moved leftward in the figure) in the groove 94. In connection with that, the screw 53 is caused to be moved backward (moved rightward in the figure) so that the resin is accumulated in front of the screw head 97. It should be noted that the resin in the groove 94 is in the form of the pellet in the feed zone S1, and in a half-melted state in the compression zone S2, and is turned into a liquid state in the metering zone S3 by being completely melted. Then, when the screw 53 is moved forward in an injection process, the liquid state resin accumulated in front of the screw head 97 is injected from the injection nozzle 95, and is filled in a cavity space of the stationary mold 73 of the mold clamping apparatus 70.

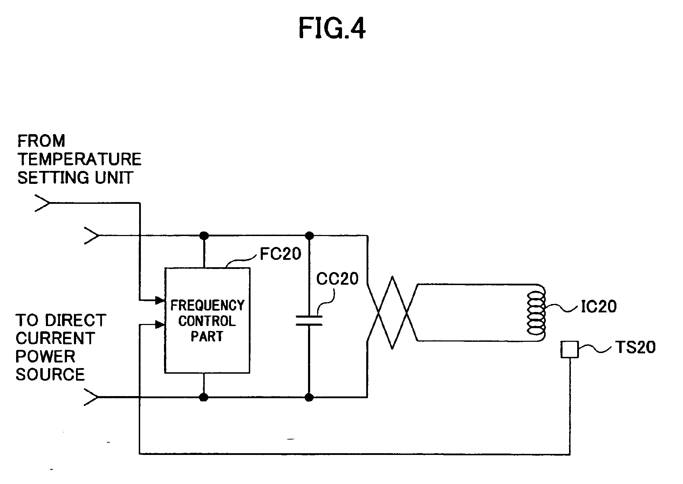

Next, a description will be given, with reference to FIG. 4, of a concept of the present invention. FIG. 4 is a circuit diagram of a temperature control device, which controls a temperature of a part to be heated by induction heating, a heating cylinder of a molding machine or a specific part of a mold being made as the part to be heated.

In FIG. 4, an induction heating coil IC20, which serves as an induction heating part, is provided in a metal made part to be heated. A temperature sensor TS20 such as a thermocouple or the like is provided in the part to be heated. A frequency controlled electric power is supplied from a frequency control part FC20 to the induction heating coil IC20. A smoothing capacitor CC20 is provided in parallel to the induction heating coil IC 20. The frequency control part FC20 is connected to a direct current power source part (not shown in the figure). A temperature detection signal from the temperature sensor TS20 and a temperature setting value signal from a temperature setting unit (not shown in the figure) are input to the frequency control part FC20.

Reasons for taking the above-mentioned circuit structure are as follows. Generally, an electric energy P required for induction heating is considered to be in proportion to I² · F² (where, I is an electric current to be supplied, and f is a frequency of the electric current). This means that an amount of heat generated in a part to be heated by the induction heating coil IC20 is controllable by an electric current I or a frequency f. In other words, it means that a temperature control of a part to be heated can be performed by an electric current I or a frequency f.

From the above-mentioned view point, in the circuit shown in FIG. 4, heating is performed by causing the part to be heated to directly generate heat by the induction heating coil 20, and a temperature control is performed by controlling the frequency f of the electric current to be supplied. A variable range of the frequency to be applied is possibly several Hz to several tens KHz, and preferably 400 Hz to 50 KHz. It should be noted that a magnitude of the electric current may be controlled for the above-mentioned reason, and, thus, a current control part may be provided instead of the frequency control part FC20. In this case, the frequency is set to a fixed value within the above-mentioned range of several Hz to several tens KHz.

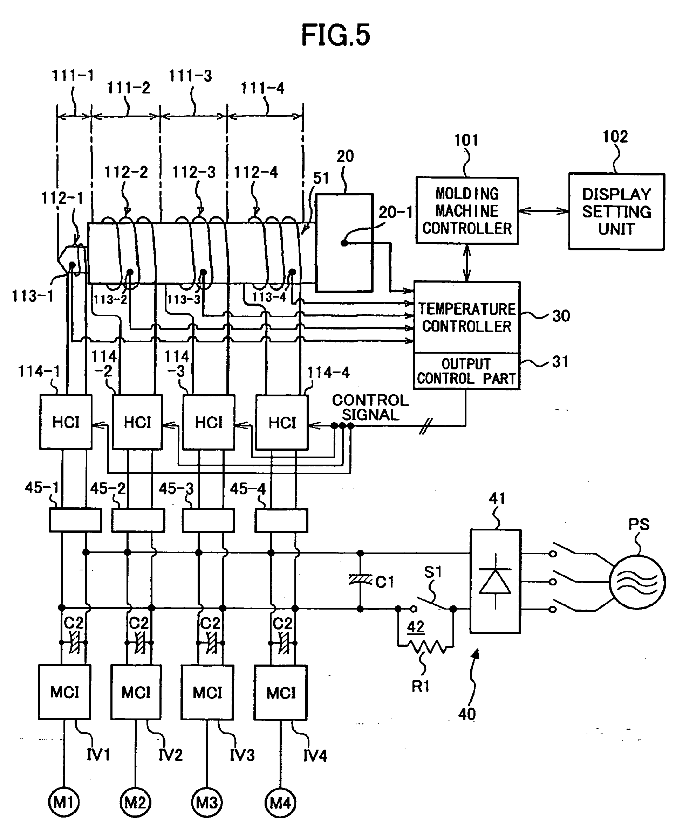

Next, a description will be given, with reference to FIG. 5, of a temperature control device of a heating cylinder of an injection molding machine according to one embodiment of the present invention. In FIG. 5, as a structural element of the injection molding machine body, only the heating cylinder 51and a water cooling cylinder 20, which is located on opposite side of the head part, are shown.

In FIG. 5, the heating cylinder 51 is divided into a plurality of zones, that is, four zones 111-1, 111-2, 111-3 and 111-4, and induction heating coils 112-1, 112-2, 112-3 and 112-4 are wound around the circumference of the zones, respectively. Temperature sensors 113-1, 113-2, 113-3 and 113-4, which are thermocouples or the like, are provided to the zones, respectively. A temperature sensor 20-1 is provided to the water cooling cylinder 20.

The detection temperature signals from the temperature sensors 113-1 to 113-4 and the temperature sensor 20-1 are fed back to a temperature controller 30. The temperature controller 30 is connected to a molding machine controller 101. A display setting unit 102 is connected to the molding machine controller 101. Setting temperatures of the zones 111-1 to 111-4 can be set individually to the display setting unit 102. The molding machine controller 101 provides the temperature setting value signals, which indicate the setting temperatures of the zones set to the display setting unit 102, to the temperature controller 30.

Heating part controlling inverters (HCI) 114-1, 114-2, 114-3 and 114-4, which have the above-mentioned frequency control function or current control function, are connected to the induction heating coils 112-1, 112-2, 112-3 and 112-4, respectively, and individually frequency-controlled electric power is supplied thereto.

The temperature controller 30 compares the temperature detection signals of the zones 111-1 to 111-4 from the temperature sensors 113-1 to 113-4 with the corresponding temperature setting value signals, and outputs control signals for performing temperature control of the zones 111-1 to 111-4 to the respective heating part controlling inverters 114-1 to 114-4 from the output control part 31 based on the result of the comparison. It should be noted that the temperature detection signals from the temperature sensors 113-1 to 113-4 are sent also to the display setting unit 102 via the molding machine controller 101. The display setting unit 102 displays the setting temperature and detection temperature of each of the zones 111-1 to 111-4.

By the way, in order to supply electric power to the induction heating coils 112-1 to 112-4, it is necessary to supply electric power to the heating part controlling inverters 114-1 to 114-4 from the direct current power source part. In the present embodiment, the direct current power source circuit 40 for supplying electric power to various motors provided in the injection molding machine is used also as the above-mentioned direct current power source part.

In the present embodiment, the direct current power source circuit 40 includes a rectification circuit 41, which is a diode bridge circuit for rectifying a three-phase alternating current from a three-phase alternating current power source PS, a starter circuit 42, which is connected to an output side of the rectification circuit 41 and having a switch S1 and a resistor R1 connected in parallel, and a smoothing capacitor C1. The smoothing capacitor C1 is provided to smooth a voltage applied to each of the heating part controlling inverters 114-1 to 114-4 and inverters IV1-IV4 mentioned below from a DC link.

As typical examples of motors provided in the injection molding machine, an ejector motor M1, a mold opening and closing motor M2, a metering motor M3 and an injection motor M4 are shown here. Electric power for drive is supplied to each of the motors M1 to M4 through motor control inverters (MCIs) IV1 to IV4. The motor control inverters IV1 to IV4 are connected to the output of the direct current power source circuit 40 in parallel. The heating part controlling inverters 114-1 to 114-4 are also connected to the output of the direct current power source circuit 40 in parallel. The smoothing capacitor C2 is connected on an input side of each of the motor controlling inverters IV1 to IV4 in parallel. The smoothing capacitors C2 are provided for smoothing a voltage applied to each of the motor controlling inverters IV1 to IV4. Moreover, the smoothing capacitors C2 play a roll of reducing an impedance of the DC link when viewed from each of the motor control inverters IV1 to IV4.

It should be noted that a feedback control system for controlling based on a difference between sensors provided to portions to be controlled and setting values is constituted for each of the motors M1 to M4 so that the control is performed by the motor controlling inverters IV1 to IV4 being provided with instruction values. A description of the structure of the control system is omitted.

According to the above-mentioned structure, with respect to the heating part controlling inverter 114-1 for example, a control signal based on a result of comparison between detected temperature according to temperature detection signal from the temperature sensor 112-1 and the setting temperature set to the zone 111-1 in the temperature controller 30 is provided to the heating part controlling inverter 114-1. The heating part controlling inverter 114-1 performs the temperature control of the zone 111-1 by adjusting the frequency of the electric current to be supplied to the induction heating coil 112-1 in accordance with the control signal. The same control operation is performed on other heating part controlling inverters 114-2 to 114-4.

As mentioned above, since the heating cylinder 51 is directly heated by induction heating, a thermal efficiency is improved as compared to heating by heat conduction of a band heater. Then, according to the frequency control, since the electric power supplied to the induction heating coil 112-1 can be continuously changed, a precise temperature control can be realized. Additionally, since the direct current power source circuit 40 for driving motors is used as the electric power source for heating the heating cylinder 51, a cost reduction can be attempted.

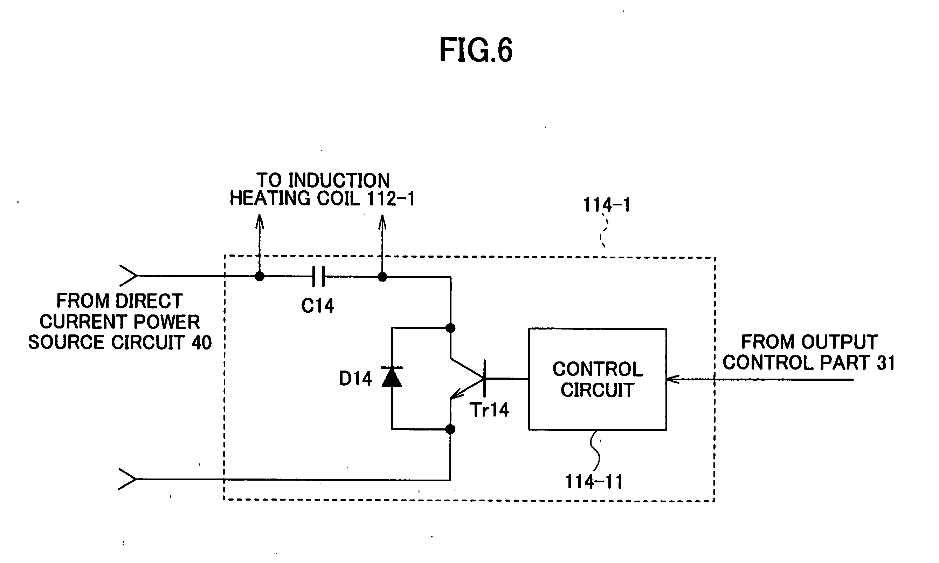

FIG. 6 is a circuit diagram showing the structure of the heating part controlling inverter with respect to the heating part controlling inverter 114-1.

The heating part controlling inverter 114-1 includes a transistor Tr14 to which a diode D14 is connected in parallel, an output capacitor C14, and a control circuit 114-11 connected to a base of the transistor Tr14. The control circuit 114-11 performs a frequency control by causing the transistor Tr14 to perform a switching operation in response to the control signal output from the output control part 31 in accordance with a previously acquired correlation between a frequency and an amount of heat supplied to the heating cylinder 51. Also in a case of the current control, the transistor Tr14 is cause to perform a switching operation in response to the control signal output from the output control part 31 in accordance with a previously acquired correlation between an electric current and an amount of heat supplied to the heating cylinder 51 so as to control the electric current flowing in the induction heating coils 112-1 to 112-4. Other heating part controlling inverters 114-2 to 114-4 have the same structure.

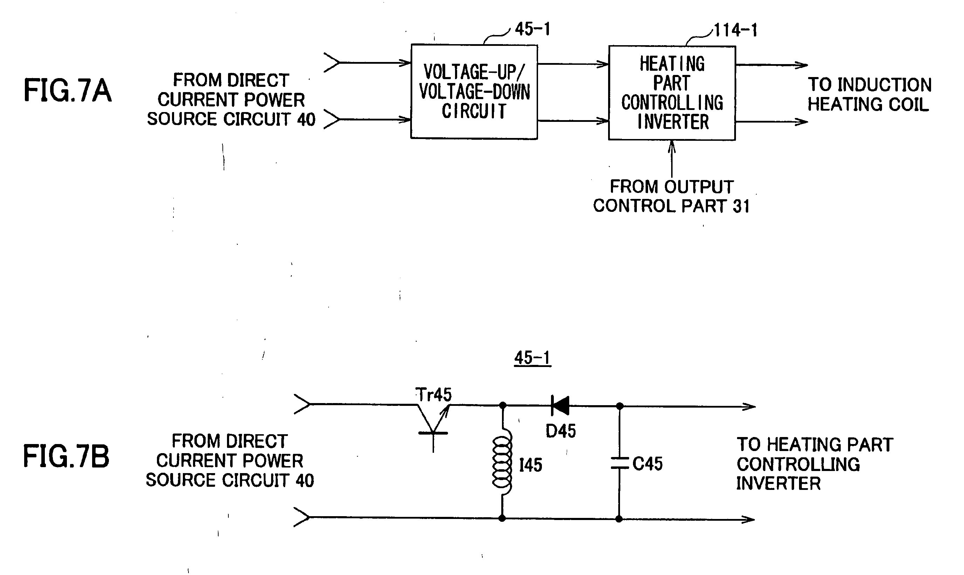

FIG. 7A is a block diagram showing an example in which a voltage-up/voltage-down circuit 45-1 as a voltage adjustment circuit is connected to an input side of the heating part controlling inverter 114-1. The voltage-up/voltage-down circuit 45-1 is a circuit for controlling voltage-up and voltage-down of the voltage applied to the heating part controlling inverter 114-1. Similarly, voltage-up/voltage-down circuits 45-2 to 45-4 are provided to other heating part controlling inverters 114-2 to 114-4, respectively.

Using the voltage-up/voltage-down circuits 45-1 to 45-4 is based on the following reason. That is, although the direct current power source circuit 40 for driving motors is used commonly as the direct current power source part for induction heating in the above-mentioned embodiment, there may be a case where a voltage for induction heating and a voltage for driving motors are different from each other. In such a case, the voltage-up/voltage-down circuits 45-1 to 45-4 adjust and output the voltage for driving motors to match with the voltage for induction heating. Moreover, the input voltages of the inverters IV1 to IV4 may temporarily increase due to a regenerative operation of motors or temporarily decrease due to overloading.

FIG. 7B is a circuit diagram of the voltage-up/voltage-down circuit 45-1. The voltage-up/voltage-down circuit 45-1 shown in FIG. 7B includes an inductor I45, a smoothing capacitor C45, a diode D45 and a transistor Tr45. The diode D45 and the transistor Tr45 are inserted and connected to a power source line in series, and the inductor I45 and the smoothing capacitor C45 are connected to the power source line in parallel. The transistor Tr45 is controlled by an instruction from the molding machine controller 101. That is, a voltage across the terminals of the smoothing capacitor C45 is detected and sent to the molding machine controller 101, and the molding machine controller 101 controls the transistor Tr45 so that a voltage across the terminals of the smoothing capacitor C45 is at a voltage previously set by the display setting unit 102. The voltage-up/voltage-down circuits 45-2 to 45-4 are provided also to the input side of other heating part controlling inverters 114-2 to 114-4.

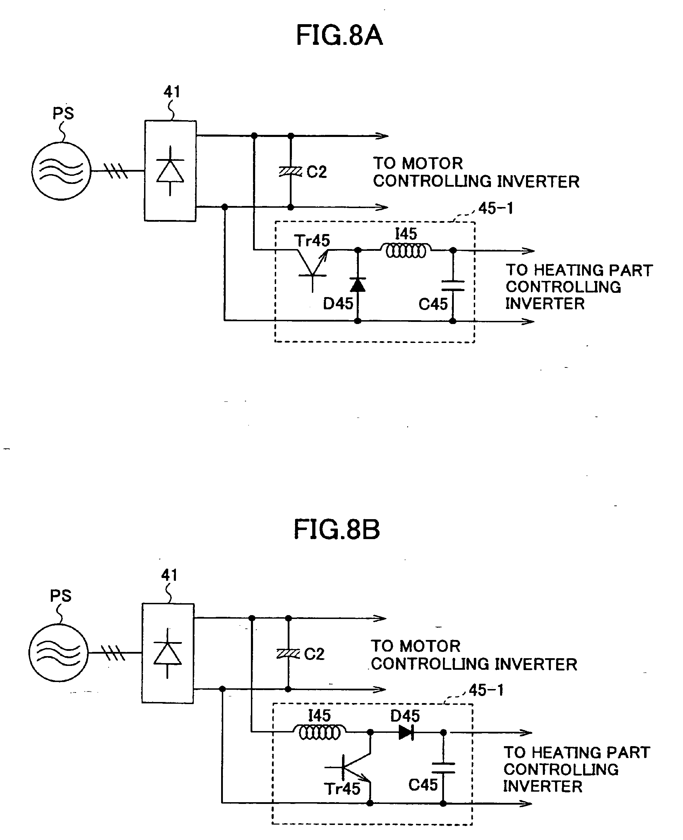

FIGS. 8A and 8B show examples of a case where a circuit having a function of voltage-up only or voltage-down only is provided on the input side of the heating part controlling inverters 114-1 to 114-4 instead of the voltage-up/voltage-down circuits 45-1 to 45-4. This is in consideration of a case where the handling voltage of the motor controlling inverter and the heating part controlling inverter are different from each other such that, for example, the motor controlling inverter handles 400 V while the heating part controlling inverter handles 200 V.

FIG. 8A shows an example of a voltage-down circuit. The voltage-down circuit is used in a case where a handling voltage of the motor controlling inverter is higher than a handling voltage of the heating part controlling inverter such that, for example, the motor controlling inverter handles 400 V while the heating part controlling inverter handles 200 V. In this case, the transistor Tr45 and the inductor I45 are inserted and connected to the electric power source line in series. The diode D45 and inductor I45 are inserted and connected to a power source line in series. The diode D45 is connected to the electric power source line in parallel on the input side of the inductor 145, and the smoothing capacitor C45 is connected to the electric power source line in parallel on the output side of the inductor I45.

FIG. 8B shows an example of a voltage-up circuit. The voltage-up circuit is used in a case where a handling voltage of the motor controlling inverter is lower than a handling voltage of the heating part controlling inverter such that, for example, the motor controlling inverter handles 200 V while the heating part controlling inverter handles 400 V. In this case, the inductor I45 and the diode D45 are inserted and connected to the electric power source line in series. The transistor Tr45 is connected to the electric power source line in parallel on the anode side of the diode D45, and the smoothing capacitor C45 is connected to the electric power source line in parallel on cathode side of the diode D45.

In either of the cases of FIG. 8A and FIG. 8B, the transistor Tr45 is controlled by the molding machine controller 101 as mentioned above.

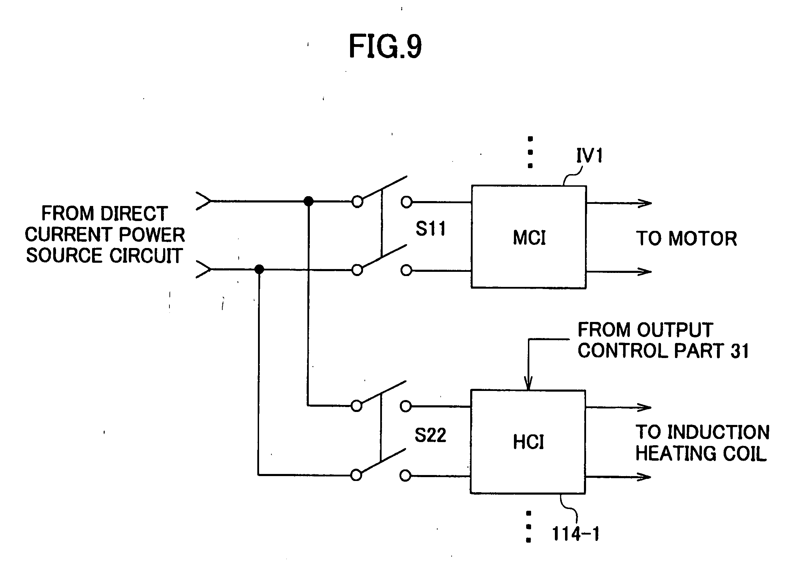

FIG. 9 shows an example where switches S11 and S22 are connected on the input sides of the motor controlling inverter (only IV1 of FIG. 5 is shown) and the heating part controlling inverter (only 114-1 of FIG. 5 is shown), respectively. Similarly, other motor controlling inverters IV2 to IV4 and heating part controlling inverters 114-2 to 114-4 are also connected with switches. Thus, providing the switches S11 and S22 as mentioned above is for the reason mentioned below.

There is a case where a maintenance work is performed on an injection molding machine without turning off a main power after an actual operation is ended. For example, when performing a maintenance work of an ejector mechanism, there is a demand for turning off a power of only an ejector motor M1. After ending an actual operation, a melted resin remains in the heating cylinder 51, and in a case where the main power is turned off, a power to the induction heating coils 112-1 to 112-4 are all turned off, and, thereby, the resin in heating cylinder 51 may deteriorate. Thus, when performing a maintenance work of one or more motors or surrounding parts in the molding machine, the switch S11 of only the corresponding motor controlling inverter is turned off and the switch S22 is turned on. On the other hand, when a melted resin does not remain in the heating cylinder 51, both the switch S11 and the switch S22 are turned off. It should be noted that the above-mentioned switches may be provided at least one of the motor controlling inverter and the heating part controlling inverter, and, preferably, provided only on the heating part controlling inverter side.

Although the voltage-up/voltage-down circuits 45-1 to 45-4 are separately provided to the heating part controlling inverters 114-1 to 114-4, respectively, in the above-mentioned embodiment, only one voltage-up/voltage-down circuits 45 having a large capacity may be provided for all of the heating part controlling inverters 114-1 to 114-4. Such a structure of the voltage-up/voltage-down circuit 45 is the same as the above-mentioned voltage-up/voltage-down circuits 45-1 to 45-4, and a description thereof will be omitted.

The present invention is not limited to the specifically disclosed embodiments, and various variations and modification may be made without departing from the scope of the present invention.

### INDUSTRIAL APPLICABILITY

The present invention is applicable not only to an injection molding machine but an extrusion molding machine. A part to be heated, which is an object to be heated, is not only the heating cylinder but also applicable to, for example, a mold that requires heating.

## Claims

1. A molding machine (10) having induction heating means for heating at least one part to be heated by induction heating, wherein
said induction heating means includes an induction heating part (112-1, 112-2, 112-3, 112-4) provided in said part to be heated, and an electric power supply control part (114-1, 114-2, 114-3, 114-4) that controls an amount of electric power supplied to the induction heating part (112-1, 112-2, 112-3, 112-4);
said electric power supply control part (114-1, 114-2, 114-3, 114-4) controls an electric power supplied to the induction heating part (112-1, 112-2, 112-3, 112-4) and a plurality of motors (M1, M2, M3, M4) according to either one of a frequency control and an electric current control;
said electric power supply control part (114-1, 114-2, 114-3, 114-4) includes a heating part controlling converter (114-1, 114-2, 114-3, 114-4) to which electric power is supplied from a direct current power source part (40); and
said direct current power source part (40) includes a capacitor (C1) and a switch (S1) connected in parallel to a resistor (R1).

2. The molding machine as claimed in claim 1,
wherein
said part to be heated is set as a plurality of locations of a heating cylinder (51).

3. The molding machine as claimed in claim 1 or 2, wherein
said heating part controlling inverter (114-1, 114-2, 114-3, 114-4) performs said frequency control within a range of several Hz to several tens KHz.

4. The molding machine as claimed in claim 1 or 2, wherein
said heating part controlling inverter (114-1, 114-2, 114-3, 114-4) performs said electric current control using a fixed frequency within a range of several Hz to several tens KHz.

5. The molding machine as claimed in any one of claims 1 to 4, wherein
each one of said plurality of motors (M1, M2, M3, M4) is configured to be supplied with electric power through a motor controlling inverter (IV1, IV2, IV3, IV4) from a direct current electric power source part (40) for motor control, and said motor controlling direct current electric power source part (40) is used commonly as said direct current power source part (40).

6. The molding machine as claimed in claim 5,
wherein
a switch (S11, S22) is provided to at least one of said heating part controlling inverter (114-1, 114-2, 114-3, 114-4) and said motor controlling inverter (IV1, IV2, IV3, IV4).

7. The molding machine as claimed in any one of claims 1 to 4, wherein
a voltage adjustment circuit (45, 45-1, 45-2, 45-3, 45-4) is provided on an input side of said heating part controlling inverter (114-1, 114-2, 114-3, 114-4).

8. A temperature control method of a molding machine (10) for heating at least one part to be heated in the molding machine (10) by induction heating, wherein
electric power is supplied from a direct current power source part (40) to a heating part controlling inverter (114-1, 114-2, 114-3, 114-4) and motor controlling inverter (IV1, IV2, IV3, IV4);
a resistor (R1), a capacitor (C1) and a switch (S1) are included in the direct current power source part (40) ; and
a temperature control of the part to be heated is performed by controlling an amount of electric power supplied for induction heating according to either one of a frequency control and an electric current control performed by said heating part controlling inverter (114-1, 114-2, 114-3, 114-4).

9. The temperature control method of a molding machine as claimed in claim 8, wherein
said frequency control is performed within a range of several Hz to several tens KHz.

10. The temperature control method of a molding machine as claimed in claim 8, wherein
said electric current control is performed at a fixed frequency within a range of several Hz to several tens KHz.

## Patentansprüche

1. Formmaschine (10) mit Induktionserwärmungsmittel zum Erwärmen von zumindest einem Teil, der durch Induktionserwärmung erwärmt werden soll, wobei
das Induktionserwärmungsmittel einen Induktionserwärmungsteil (112-1, 112-2, 112-3, 112-4) aufweist, der in dem zu erwärmenden Teil vorgesehen ist, sowie einen Stromliefersteuerteil (114-1, 114-2, 114-3, 114-4), der eine Menge des an den Induktionserwärmungsteil (112-1, 112-2, 112-3, 112-4) gelieferten Stroms steuert;
der Stromliefersteuerteil (114-1, 114-2, 114-3, 114-4) eine elektrische Leistung bzw. einen Strom steuert, der an den Induktionserwärmungsteil (112-1, 112-2, 112-3, 112-4) geliefert wird, sowie eine Vielzahl von Motoren (M1, M2, M3, M4) gemäß entweder einer Frequenzsteuerung oder einer Stromsteuerung;
der Stromliefersteuerteil (114-1, 114-2, 114-3, 114-4) einen Erwärmungsteilsteuerungswandler (114-1, 114-2, 114-3, 114-4) aufweist, an den elektrische Leistung bzw. Strom von einem Gleichstromleistungsquellenteil (40) geliefert wird; und
der Gleichstromleistungsquellenteil (40) einen Kondensator (C1) und einen Schalter (S1) aufweist, die parallel zu einem Widerstand (R1) verbunden sind.

2. Formmaschine gemäß Anspruch 1, wobei der zu erwärmende Teil als eine Vielzahl von Positionen eines Erwärmungszylinders (51) eingestellt wird.

3. Formmaschine gemäß Anspruch 1 oder 2, wobei der Erwärmungsteilsteuerungsstromrichter (114-1, 114-2, 114-3, 114-4) die Frequenzsteuerung innerhalb eines Bereichs von einigen Hz bis einigen Zehn KHz ausführt.

4. Formmaschine gemäß Anspruch 1 oder 2, wobei der Erwärmungsteilsteuerungsstromrichter (114-1, 114-2, 114-3, 114-4) die Steuerung des elektrischen Stroms unter Verwendung einer festen Frequenz innerhalb eines Bereichs von einigen Hz bis einigen Zehn KHz ausführt.

5. Formmaschine gemäß einem der Ansprüche 1 bis 4, wobei jeder der Vielzahl von Motoren (M1, M2, M3, M4) konfiguriert ist, um mit elektrischer Leistung bzw. Strom durch einen Motorsteuerungsstromrichter (IV1, IV2, IV3, IV4) von einem Gleichstromleistungsquellenteil (40) zur Motorsteuerung beliefert zu werden, und der Gleichstrom-Motorsteuerungsleistungsquellenteil (40) gemeinsam als Gleichstrom-Leistungsquellenteil (40) verwendet wird.

6. Formmaschine gemäß Anspruch 5, wobei ein Schalter (S11, S12) an zumindest einem Erwärmungsteilsteuerungsstromrichter (114-1, 114-2, 114-3, 114-4) und dem Motorsteuerungsstromrichter (IV1, IV2, IV3, IV4) vorgesehen ist.

7. Formmaschine gemäß einem der Ansprüche 1 bis 4, wobei eine Spannungsanpassungsschaltung (45, 45-1, 45-2, 45-3, 45-4) auf einer Eingangsseite des Erwärmungsteilsteuerungsstromrichters (114-1, 114-2, 114-3, 114-4) vorgesehen ist.

8. Ein Temperatursteuerverfahren einer Formmaschine (10) zum Erwärmen von zumindest einem zu erwärmenden Teil in der Formmaschine (10) durch Induktionserwärmung, wobei
elektrische Leistung von dem Gleichstromleistungsquellenteil (40) an einen Erwärmungsteilsteuerungsstromrichter (114-1, 114-2, 114-3, 114-4) und die Motorsteuerungsstromrichter (IV1, IV2. IV3, IV4) geliefert wird;
ein Widerstand (R1), ein Kondensator (C1) und ein Schalter (S1) in dem Gleichstromleistungsquellenteil (40) enthalten sind; und
eine Temperatursteuerung des zu erwärmenden Teils durch Steuern eines Betrags der elektrischen Leistung ausgeführt wird, die zur Induktionserwärmung gemäß entweder einer Frequenzsteuerung oder einer Steuerung der elektrischen Leistung bzw. Stromsteuerung geliefert wird, die durch den Erwärmungsteilsteuerungsstromrichter (114-1, 114-2, 114-3, 114-4) ausgeführt werden.

9. Temperatursteuerverfahren einer Formmaschine gemäß Anspruch 8, wobei die Frequenzsteuerung innerhalb eines Bereichs von mehreren Hz bis mehreren Zehn KHz ausgeführt wird.

10. Temperatursteuerverfahren einer Formmaschine gemäß Anspruch 8, wobei die Stromsteuerung bei einer festen Frequenz innerhalb eines Bereichs von mehreren Hz bis mehreren Zehn KHz ausgeführt wird.

## Revendications

1. Machine de moulage (10) comportant des moyens de chauffage par induction pour chauffer au moins une partie à chauffer par chauffage par induction, dans laquelle
les moyens de chauffage par induction comprennent une partie de chauffage par induction (112-1, 112-2, 112-3, 112-4) prévue dans la partie à chauffer, et une partie de commande d'alimentation électrique (114-1, 114-2, 114-3, 114-4) qui contrôle la quantité d'énergie électrique fournie à la partie de chauffage par induction (112-1, 112-2, 112-3, 112-4) ;
la partie de commande d'alimentation électrique (114-1, 114-2, 114-3, 114-4) contrôle l'énergie électrique fournie à la partie de chauffage par induction (112-1, 112-2, 112-3, 112-4) et à une pluralité de moteurs (M1, M2, M3, M4) selon l'une ou l'autre d'une commande en fréquence et d'une commande en courant électrique ;
la partie de commande d'alimentation électrique (114-1, 114-2, 114-3, 114-4) comprend un convertisseur de commande de partie chauffante (114-1, 114-2, 114-3, 114-4) auquel de l'énergie électrique est fournie à partir d'une partie source d'alimentation en courant continu (40) ; et
la partie source d'alimentation en courant continu (40) comprend un condensateur (C1) et un commutateur (S1) connectés en parallèle avec une résistance (R1).

2. Machine de moulage selon la revendication 1, dans laquelle
la partie à chauffer est définie sous forme d'une pluralité d'emplacements d'un cylindre de chauffage (51).

3. Machine de moulage selon la revendication 1 ou 2, dans laquelle
l'onduleur de commande de partie chauffante (114-1, 114-2, 114-3, 114-4) réalise la commande en fréquence dans une plage comprise entre quelques Hz et plusieurs dizaines de kHz.

4. Machine de moulage selon la revendication 1 ou 2, dans laquelle
l'onduleur de commande de partie chauffante (114-1, 114-2, 114-3, 114-4) réalise la commande en courant électrique en utilisant une fréquence fixe dans une plage comprise entre quelques Hz et plusieurs dizaines de kHz.

5. Machine de moulage selon l'une quelconque des revendications 1 à 4, dans laquelle
chacun de la pluralité de moteurs (M1, M2, M3, M4) est agencé pour être alimenté en énergie électrique par l'intermédiaire d'un onduleur de commande de moteur (IV1, IV2, IV3, IV4) à partir d'une partie source d'alimentation électrique en courant continu (40) pour la commande des moteurs, et la partie source d'alimentation électrique en courant continu de commande de moteurs (40) est utilisée en commun en tant que ladite partie source d'alimentation en courant continu (40).

6. Machine de moulage selon la revendication 5, dans laquelle
un commutateur (S11, S22) est prévu vers au moins l'un de l'onduleur de commande de partie chauffante (114-1, 114-2, 114-3, 114-4) et de l'onduleur de commande de moteurs (IV1, IV2, IV3, IV4).

7. Machine de moulage selon l'une quelconque des revendications 1 à 4, dans laquelle
un circuit d'ajustement de tension (45, 45-1, 45-2, 45-3, 45-4) est prévu sur un côté d'entrée de l'onduleur de commande de partie chauffante (114-1, 114-2, 114-3, 114-4).

8. Procédé de contrôle de température d'une machine de moulage (10) pour chauffer au moins une partie à chauffer dans la machine de moulage (10) par chauffage par induction, dans lequel
de l'énergie électrique est fournie à partir d'une partie source d'alimentation en courant continu (40) à un onduleur de commande de partie chauffante (114-1, 114-2, 114-3, 114-4) et à des onduleurs de commande de moteur (IV1, IV2, IV3, IV4) ;
une résistance (R1), un condensateur (C1) et un commutateur (S1) sont inclus dans la partie source d'alimentation en courant continu (40) ; et
un contrôle de température de la partie à chauffer est réalisé en contrôlant la quantité d'énergie électrique fournie pour le chauffage par induction selon l'une ou l'autre d'une commande en fréquence et d'une commande en courant électrique réalisée par l'onduleur de commande de partie chauffante (114-1, 114-2, 114-3, 114-4).

9. Procédé de contrôle de température d'une machine de moulage selon la revendication 8, dans lequel
la commande en fréquence est réalisée dans une plage comprise entre quelques Hz et plusieurs dizaines de kHz.

10. Procédé de contrôle de température d'une machine de moulage selon la revendication 8, dans lequel
la commande en courant électrique est réalisée à une fréquence fixe dans une plage comprise entre quelques Hz et plusieurs dizaines de kHz.
